# EUROPÄISCHE PATENTSCHRIFT

(11) **EP 2 913 561 B1**
(45) Veröffentlichungstag und Bekanntmachung des Hinweises auf die Patenterteilung: **06.07.2016**
(21) Anmeldenummer: 14156740.4
(22) Anmeldetag: 26.02.2014
(51) Int. Cl.: F16H 57/02, H02K 7/116, F16H 57/08, F16B 21/18

(54) **Motor-Planetengetriebe-Anordnung und Verfahren zum Verbinden eines Motors mit einem Planetengetriebe zur Herstellung einer Motor-Planetengetriebe-Anordnung**
Motor planetary drive assembly and method of connecting a motor with a planetary drive to produce a motor planetary drive assembly
Système d'engrenage planétaire motorisé et procédé permettant de relier un moteur à un engrenage planétaire pour fabriquer un agencement moteur-engrenage planétaire

(43) Veröffentlichungstag der Anmeldung: 02.09.2015
(73) Patentinhaber: IMS Gear GmbH, 78166 Donaueschingen (DE)
(72) Erfinder: Olbrich, Christine, 79879 Wutach-Ewattingen (DE); Kieninger, Matthias, 78089 Unterkirnach (DE); Schwörer, Uwe, 79877 Friedenweiler (DE)
(74) Vertreter: Westphal, Mussgnug & Partner Patentanwälte mbB

(56) Entgegenhaltungen:
- EP-A2- 2 177 789
- DE-A1-102008 030 003
- DE-C1- 10 145 751
- DE-C1- 19 729 988
- DE-U1-202006 006 116
- GB-A- 1 200 717
- US-A- 4 092 946

## Beschreibung

Planetengetriebe mit Sonnenrad, Planetenträger mit Planetenrädern und Hohlrad sind eine bekannte und für viele Anwendungen gut geeignete Möglichkeit, die Eigenschaften eines Motors, insbesondere seine Drehzahl und sein Drehmoment, an die Erfordernisse einer gegebenen Anordnung anzupassen.

Dementsprechend findet man bei vielen technischen Anwendungen, insbesondere im Zusammenhang mit Spindelantrieben, Motor-Planetengetriebe-Anordnungen, bei denen ein Motor mit einem Planetengetriebe verbunden ist (siehe z.B. DE 102008030003 A). Eine beliebte Art der Verbindung sieht vor, dass die Verbindung über das Hohlrad erfolgt, indem ein Abschnitt des Hohlrads einen Abschnitt des Motorgehäuses übergreift und mit dem Motorgehäuse des Motors verschraubt oder verstiftet wird. Diese Art der Befestigung ist aber relativ zeitaufwändig durchzuführen und gegebenenfalls, insbesondere wenn sie schnell durchgeführt werden soll, unpräzise im Hinblick auf eine exakte Ausrichtung des Getriebes und die Schaffung glatter Oberflächen der Anordnung.

Die Aufgabe der Erfindung besteht daher in der Bereitstellung einer Motor-Planetengetriebe-Verbindung, die schnell und präzise herzustellen ist und eines Verfahrens zum Verbinden eines Motors mit einem Planetengetriebe zur Herstellung einer Motor-Planetengetriebe-Anordnung.

Diese Aufgabe wird gelöst durch eine Motor-Planetengetriebe-Anordnung mit den Merkmalen eines der Ansprüche 1 oder 6 und durch ein Verfahren zum Verbinden eines Motors mit einem Planetengetriebe zur Herstellung einer Motor-PlanetengetriebeAnordnung mit den Merkmalen eines der Ansprüche 5 oder 11. Vorteilhafte Weiterbildungen der Erfindung sind Gegenstand der abhängigen Patentansprüche.

Die Ansprüche 1 und 6 bzw. 5 und 10 beruhen jeweils auf dem identischen Wirkungsprinzip. Sie unterscheiden sich hinsichtlich der Rolle, die Motor bzw. Hohlrad des Planetengetriebes bei der Realisierung dieses Wirkungsprinzips spielen, gehen aber durch Vertauschung dieser Rolle auseinander hervor.

Die erfindungsgemäße Motor-Planetengetriebe-Anordnung hat einen Motor, der ein Motorgehäuse aufweist, ein mit dem Motor verbundenes Planetengetriebe, das ein Hohlrad mit einem Abschnitt aufweist, welcher einen Abschnitt des Motorgehäuses übergreift und ein Verbindungselement, welches das Hohlrad mit dem Motorgehäuse (und somit auch dem Motor, da das Motorgehäuse eines von dessen Bestandteilen ist) verbindet.

Erfindungswesentlich ist, dass das Verbindungselement ein Runddrahtsprengring ist, welcher motorseitig in einen Einstich im Motorgehäuse eingreift und welcher hohlradseitig in einen Einstich im den Abschnitt des Motors übergreifenden Abschnitt des Hohlrads eingreift. Dass dies voraussetzt, dass der Einstich im den Abschnitt des Motors übergreifenden Abschnitt des Hohlrads an der inneren, dem Motor zugewandten Seite dieses Abschnitts angeordnet sein muss, sollte klar sein.

Eine derartige, durch einen einrastenden Runddrahtsprengring zusammengehaltene Verbindung ist nicht nur schnell herzustellen, sondern auch sehr präzise ausgestaltbar, da die Verbindungsgeometrie durch die in den zu verbindenden Teilen angeordneten Einstiche genau vorgegeben werden kann.

Als besonders vorteilhaft hat sich erwiesen, wenn mindestens einer der Einstiche, insbesondere der Einstich im den Abschnitt des Motors übergreifenden Abschnitt des Hohlrads, eine schräg verlaufende Wandfläche aufweist, so dass das Hohlrad axial gegen das Motorgehäuse verspannt ist. Zweckmäßigerweise ist dies die dem Motor zugewandte Wandfläche des Einstichs des Hohlrads. Die Wirkungsangabe impliziert, dass die Schräge der Wandfläche so verläuft, dass der Einstich sich in Richtung auf seinen Boden hin verjüngt und mithin der Winkel zwischen der Wandfläche und der Rotordrehachse des Motors <90° ist.

Auf diese Art kann insbesondere eine hochpräzise Positionierung des Planetengetriebes in axialer Richtung erreicht werden.

Anzumerken ist noch, dass der Winkel relativ zur Drehachse des Motors, unter dem die Wandfläche verläuft einen Einfluss auf die Lösbarkeit der Verbindung hat. Bei Winkeln, die größer als 45° sind, ist die Verbindung so stark, dass sie ohne nicht mehr ohne Beschädigung gelöst werden kann. Bei kleineren Winkeln ist die Verbindung wieder lösbar, was aber gleichzeitig eine schwächere Verbindung und eine weniger definierte Position des Hohlrads und damit des Planetengetriebes relativ zum Motor mit sich bringt.

Besonders einfach wird die Verbindung herstellbar, wenn die motorseitige Stirnseite des den Abschnitt des Motors übergreifenden Abschnitts des Hohlrads eine einlaufende Fase aufweist. Der Begriff "einlaufende Fase" bedeutet dabei, dass die Fase so angeordnet ist, dass sich der Innendurchmesser des den Motor übergreifenden Abschnitts des Hohlrads in dessen dem Motor zugewandten Endabschnitt vergrößert. Dies ermöglicht es, den Runddrahtsprengring beim Aufschieben des Hohlrads auf den Motor besonders einfach in den Innenraum des den Motor übergreifenden Abschnitt des Hohlrads einzuführen und langsam in den Einstich im Motorgehäuse hineinzudrücken.

Besonders vorteilhaft ausgestaltet ist die Motor-Planetengetriebe-Anordnung, wenn der vom Abschnitt des Hohlrads übergriffene Abschnitt des Motorgehäuses einen geringeren Umfang aufweist als der nicht vom Abschnitt des Hohlrads übergriffene Teil des Motorgehäuses, so dass der nicht übergriffene Teil des Motorgehäuses plan in das Hohlrad bzw. dessen äußere Oberfläche übergeht. Insbesondere in Verbindung mit einer axialen Verspannung kann so erreicht werden, dass eine Anordnung ohne Vorsprünge und Ritzen realisiert ist.

Das erfindungsgemäße Verfahren zum Verbinden eines Motors mit einem Planetengetriebe zur Herstellung einer Motor-Planetengetriebe-Anordnung umfasst die -vorzugsweise in der Reihenfolge ihrer Nennung auszuführenden- Schritte
- Bereitstellen eines Motors mit einem Motorgehäuse, das einen Einstich aufweist,
- Bereitstellen eines Planetengetriebes mit einem Hohlrad, wobei das Hohlrad einen Abschnitt zum Übergreifen des Abschnitts des Motors, in dem der Einstich angeordnet ist aufweist, wobei in diesem Abschnitt ein Einstich angeordnet ist und wobei an der Stirnfläche dieses Abschnitts eine einlaufende Fase angeordnet ist,
- Anordnen eines Runddrahtsprengrings am Einstich des Motorgehäuses, und
- Aufschieben des Hohlrads mit dem Abschnitt zum Übergreifen des Abschnitts des Motors auf den Motor bzw. genauer gesagt auf das Motorgehäuse , so dass der Runddrahtsprengring zunächst durch die einlaufende Fase in den Einstich des Motorgehäuses gedrückt wird und dann mit einem Abschnitt in den Einstich des Hohlrads einrastet.

Anzumerken ist dabei, dass als Aufschieben des Hohlrads im Sinne dieser Patentschrift jede Bewegung zu verstehen ist, die zu einer Verringerung des Abstands zwischen Hohlrad und Motor bzw. Motorgehäuse führt. Es kommt also nicht darauf an, ob der Motor bewegt und das Hohlrad stillgehalten wird oder umgekehrt oder ob beide Teile aufeinander zubewegt werden.

Wie bereits oben erwähnt wurde, kann dasselbe Wirkungsprinzip auch mit denselben Vorteilen realisiert werden, wenn nicht das Hohlrad den Motor übergreift, sondern ein Abschnitt des Motorgehäuses das Hohlrad übergreift. In diesem Fall weist der Motor ein Motorgehäuse auf, und das mit dem Motor verbundenen Planetengetriebe hat ein Hohlrad mit einem Abschnitt, welcher von einem Abschnitt des Motorgehäuses übergriffen wird, während das Verbindungselement, welches das Hohlrad mit dem Motorgehäuse verbindet, identisch ausgeführt bleibt. In diesem Fall ist dann erfindungswesentlich, dass das Verbindungselement ein Runddrahtsprengring ist, welcher motorseitig in einen Einstich im das Hohlrad übergreifenden Abschnitt im Motorgehäuse eingreift und welcher hohlradseitig in einen Einstich im Hohlrad eingreift.

Auch bei dieser Ausgestaltung kann eine axiale Verspannung realisiert werden, wenn mindestens einer der Einstiche, insbesondere der Einstich im den Abschnitt des Motors übergreifenden Abschnitt des Hohlrads, eine schräg verlaufende Wandfläche aufweist, so dass das Hohlrad axial gegen das Motorgehäuse verspannt ist.

Damit bei dieser Umsetzung des Wirkungsprinzips eine einfache Herstellbarkeit der Verbindung erreicht wird, kann die hohlradseitige Stirnseite des den Abschnitt des Hohlrads übergreifenden Abschnitts des Motorgehäuses mit einer einlaufenden Fase versehen werden.

Auch bei dieser Ausgestaltung des Wirkungsprinzips kann eine plane, fast strukturlose Oberfläche erhalten werden, und zwar dadurch, dass der vom Motorgehäuse übergriffene Abschnitt des Hohlrads einen geringeren Umfang aufweist als der nicht vom Motorgehäuse übergriffene Teil des Hohlrads, so dass der nicht übergriffene Teil des Hohlrads plan in das Motorgehäuse übergeht.

Bei beiden Ausgestaltungen des Wirkungsprinzips ist es bevorzugt, wenn eine Verdrehsicherung das Verdrehen des Hohlrads relativ zum Motorgehäuse unterbindet. Diese kann beispielsweise durch das Vorsehen einer Zahnstruktur an der Außenseite des übergriffenen Abschnitts des Motorgehäuses bzw. Hohlrads und einer in diese eingreifenden, komplementären Zahnstruktur an der Innenseite des übergreifenden Abschnitts des Hohlrads bzw. des Motorgehäuses realisiert werden.

Das Verfahren zum Verbinden eines Motors mit einem Planetengetriebe zur Herstellung einer Motor-Planetengetriebe-Anordnung gemäß der zweiten Umsetzung des Wirkungsprinzips umfasst die Schritte
- Bereitstellen eines Planetengetriebes mit einem Hohlrad, wobei das Hohlrad einen Einstich aufweist,
- Bereitstellen eines Motors mit einem Motorgehäuse, wobei das Motorgehäuse einen Abschnitt zum Übergreifen des Abschnitts des Hohlrads, in dem der Einstich angeordnet ist aufweist, wobei in diesem Abschnitt ein Einstich angeordnet ist und wobei an der Stirnfläche dieses Abschnitts eine einlaufende Fase angeordnet ist,
- Anordnen eines Runddrahtsprengrings am Einstich des Hohlrads, und
- Aufschieben des Motors mit dem Abschnitt zum Übergreifen des Abschnitts des Hohlrads auf das Hohlrad, so dass der Runddrahtsprengring zunächst durch die einlaufende Fase in den Einstich des Hohlrads gedrückt wird und dann mit einem Abschnitt in den Einstich des Motorgehäuses einrastet.

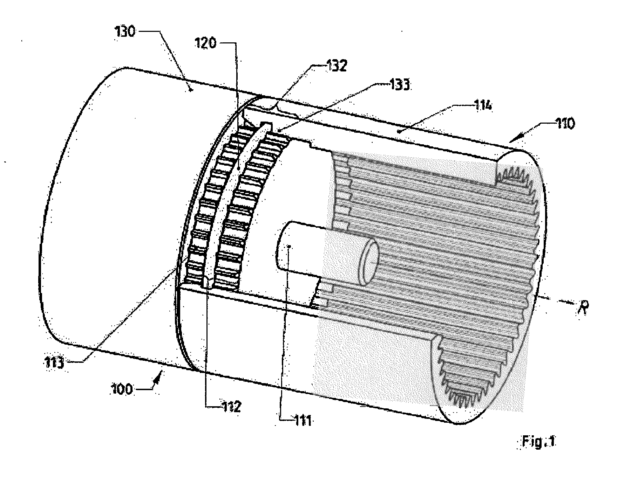

Die Erfindung wird nachfolgend anhand von Figuren, die ein Ausführungsbeispiel darstellen, näher erläutert. Es zeigen:
- Fi-g.1:: Eine teilweise geöffnete 3D-Teilansicht einer Motor-Planetengetriebe-Anordnung,
- Fi-g.2a:: eine Darstellung eines Querschnitts durch die Motor-Planetengetriebe-Anordnung aus Figur 1, geschnitten entlang einer Ebene, in der die Rotor-Drehachse liegt,
- Fig.2b:: eine Ausschnittsvergrößerung des Details Z aus Figur 2a,
- Fig.3a:: eine Darstellung des ersten Zwischenzustands bei der Herstellung der Verbindung zwischen Motor und Planetengetriebe, dargestellt in demselben Querschnitt wie Figur 2a,
- Fig.3b:: eine Ausschnittsvergrößerung des Details X aus Figur 3a,
- Fig.3c:: eine Darstellung eines zweiten Zwischenzustands bei der Herstellung der Verbindung zwischen Motor und Planetengetriebe, dargestellt in demselben Querschnitt wie Figur 2a,
- Fig.3d:: eine Ausschnittsvergrößerung des Details Y aus Figur 3c, und
- Fig.4:: eine teilweise geöffnete 3D-Ansicht eines anderen Ausführungsbeispiels einer Motor-PlanetengetriebeAnordnung.

Soweit Figuren dasselbe Ausführungsbeispiel zeigen, werden in ihnen identische Bezugszeichen für identische Bauteile verwendet. Allerdings wurde in diesem Fall um die Übersichtlichkeit zu verbessern nicht jedes Bezugszeichen in jeder Figur dargestellt.

Figur 1 zeigt eine teilweise geöffnete 3D-Teilansicht einer Motor-Planetengetriebe-Anordnung 100 mit einem Motor 110 mit Rotor 111 und Motorgehäuse 114 mit einem zurückspringenden Abschnitt 112 auf, welcher über einen Runddrahtsprengring 120 mit einem Hohlrad 130 mit Innenverzahnung 131 des Planetengetriebes, das geöffnet dargestellt ist, verbunden ist. Dabei handelt es sich um eine Teilansicht, weil die weiteren Bestandteile des Planetengetriebes, nämlich Planetenträger mit Planetenrädern und Sonnenrad, nicht dargestellt sind, da es auf sie nicht ankommt. Wie man der Figur 1 entnimmt, weist die gesamte Anordnung im Wesentlichen eine Zylindersymmetrie auf, wobei die Rotordrehachse R die Zylinderachse darstellt.

Der Abschnitt 112 des Motorgehäuses 114, der von einem Abschnitt 132, nämlich dem motorseitigen Endabschnitt des Hohlrads 130 übergriffen wird. Im Abschnitt 112 ist eine Außenverzahnung vorgesehen, in die eine im Abschnitt 132 des Hohlrads 130 vorgesehene, komplementäre Innenverzahnung 133 eingreift, so dass eine Verdrehsicherung gegen Verdrehung des Motors 110 relativ zum Hohlrad 130 vorhanden ist. Dabei ist insbesondere möglich und in der dargestellten Ausführungsform realisiert, dass die komplementäre Innenverzahnung 133 im Abschnitt 132 des Hohlrads 130 von der Innenverzahnung 131, die das Hohlrad 130 aufweist, um seine Funktion im nicht vollständig dargestellten Planetengetriebe zu erfüllen, abweichen kann.

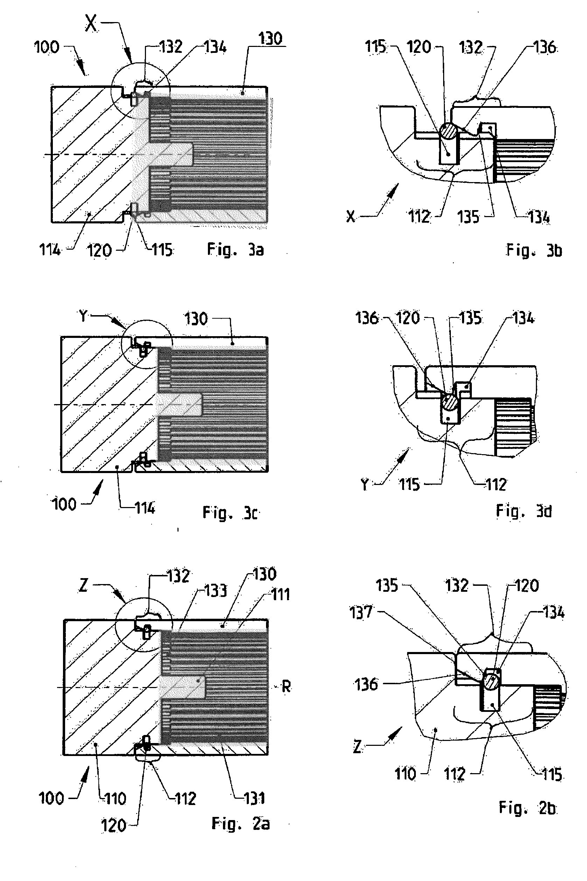

Den detaillierten Aufbau und das Wirkungsprinzip der Verbindung zwischen Motor 110 und Hohlrad 130 über den Runddrahtsprengring 120 entnimmt man besonders deutlich der Querschnittsdarstellung gemäß Figur 2a und der Vergrößerung des durch einen Kreis gekennzeichneten Details Z, die in Figur 2b gezeigt ist.

Wie man der Figur 2b entnimmt, weist der Abschnitt 112 des Motorgehäuses einen radial umlaufenden Einstich 115 auf, in den der Runddrahtsprengring 120 mit einem Abschnitt seines Querschnitts eingreift. Der den Abschnitt 112 des Motorgehäuses bzw. Motors übergreifende Abschnitt 132 des Hohlrads 130 weist ebenfalls einen radial umlaufenden Einstich 134 auf, in den der Runddrahtsprengring 120 mit einem Abschnitt seines Querschnitts eingreift. Dadurch ist eine Verbindung zwischen Motor 110 bzw. Motorgehäuse 114 und Hohlrad 130 bewirkt.

Dabei hat die motorseitige Wandfläche 135 des Einstichs 134 einen schrägen Verlauf und läuft unter einem Winkel, der kleiner als 90° aber größer als 45° ist relativ zur Rotorachse R, wodurch eine axiale Verspannung von Motor 110 und Hohlrad 130 bewirkt ist, die in Figur 2b durch den Verlauf der Hilfslinie H innerhalb des Einstichs 115, die nicht mit einer Wandfläche des Einstichs 115 zusammenfällt, sondern in dessen Innenraum verläuft, veranschaulicht ist. Der Sprengring 120 sorgt somit durch sein Zusammenwirken mit der schräg verlaufenden motorseitigen Wandfläche 135 dafür, dass die Frontfläche 137 des einen Abschnitt 112 des Motorgehäuses 114 übergreifenden Abschnitts 132 des Hohlrads 130, welche zusammen mit der einlaufenden Fase 136 die motorseitige Stirnseite des Hohlrads 130 bildet, an das Motorgehäuse 114 angepresst wird, was einerseits eine sehr hohe Positioniergenauigkeit mit sich bringt, andererseits aber in Verbindung mit der Maßnahme, dass der vom Abschnitt 132 des Hohlrads 130 übergriffene Abschnitt 112 des Motorgehäuses 114 einen geringeren Umfang aufweist als der nicht vom Abschnitt 112 des Hohlrad 130 übergriffene Teil des Motorgehäuses 114, so dass der nicht übergriffene Teil des Motorgehäuses 114 plan in das Hohlrad 130 bzw. dessen den Abschnitt 112 des Motorgehäuses 114 übergreifenden Abschnitt 132 übergeht, eine fast strukturfreie Oberfläche der Motor-Planetengetriebe-Anordnung 100 mit sich bringt.

Der Winkel zwischen Fase 136 und Rotordrehachse R beträgt in diesem Ausführungsbeispiel etwa 30°. Die durch diese Fase 136 erzielte Wirkung enfaltet sich beim Zusammenfügen der Motor-Planetengetriebe-Anordnung 100, die nachfolgend anhand der Figuren 3a bis 3d detailliert beschrieben wird.

Figur 3a und die Vergrößerung des Details X gemäß Figur 3b zeigen einen ersten Zwischenschritt bei der Herstellung einer Motor-Planetengetriebe-Anordnung 100 aus einem Motor 110 und einem Hohlrad 130 des Planetengetriebes, dessen weitere Bestandteile nicht dargestellt sind. In diesem Stadium sind der Motor 110 mit Motorgehäuse 114, das einen Einstich 115 aufweist und das Planetengetriebe mit Hohlrad 130, einen Abschnitt 132 zum Übergreifen des Abschnitts 112 des Motorgehäuses 114, in dem der Einstich 115 angeordnet ist aufweist, mit am Abschnitt 132 angeordnetem Einstich 134 und einlaufender Fase 136 bereits bereitgestellt und ein Runddrahtsprengring 120 am Einstich 115 des Motorgehäuses 114 angeordnet. Ferner ist bereits mit dem Aufschieben des Hohlrads 130 mit dem Abschnitt 132 zum Übergreifen des Abschnitts 112 des Motorgehäuses 114 auf den Motor 110 begonnen worden.

Durch weiteres Aufschieben des Hohlrads 130 (bzw. genauer gesagt des Abschnitts 132 des Hohlrads 130) auf den Abschnitt 112 des Motorgehäuses 114 wird der soeben beschriebene ersten Zwischenzustand in den zweiten, in Figur 3c und der Vergrößerung von deren Detail Y, die als Figur 3d wiedergegeben ist, dargestellten Zwischenzustand überführt. Dementsprechend wird, wie insbesondere in Figur 3d zu sehen ist, der Runddrahtsprengring 120 in den Einstich 115 am Abschnitt 112 des Motorgehäuses 114 eingedrückt.

Wird das Hohlrad 130 noch weiter auf den Motor 110 bzw. das Motorgehäuse 114 aufgeschoben, erreicht der Runddrahtsprengring 120 den Einstich 134 und dehnt sich in diesen hinein aus, so dass die Verbindung einrastet, wobei die Wechselwirkung zwischen dem sich ausdehnenden Runddrahtsprengring 120 der schrägen Wand 135 des Einstichs 134 das Hohlrad 130 mit dem Motorgehäuse 114 axial verspannt. Damit ist dann die in den Figuren 1 sowie 2a und 2b gezeigte Motor-Planetengetriebe-Anordnung 100 hergestellt.

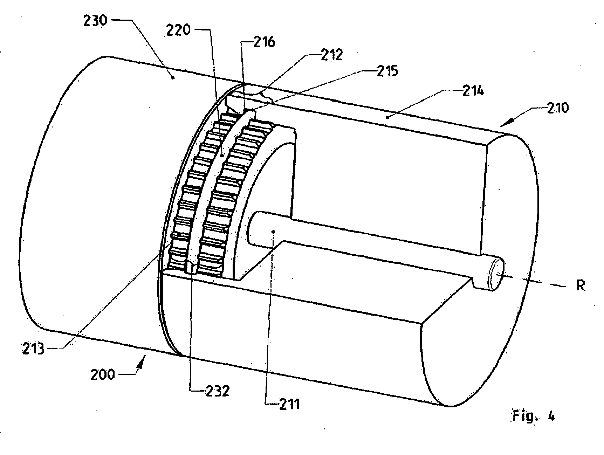

Figur 4 zeigt eine teilweise geöffnete 3D-Teilansicht einer Motor-Planetengetriebe-Anordnung 200 mit einem teilweise geöffneten Motor 210 mit Rotor 211 und Motorgehäuse 214 mit einem vorstehenden Abschnitt 212 auf, welcher über einen Runddrahtsprengring 220 mit einem Hohlrad 230 mit von außen nicht nicht erkennbarer Innenverzahnung des Planetengetriebes, verbunden ist. Dabei handelt es sich um eine Teilansicht, weil die weiteren Bestandteile des Planetengetriebes, nämlich Planetenträger mit Planetenrädern und Sonnenrad, nicht dargestellt sind, da es auf sie nicht ankommt. Wie man der Figur 4 entnimmt, weist die gesamte Anordnung im Wesentlichen eine Zylindersymmetrie auf, wobei die Rotordrehachse R die Zylinderachse darstellt.

Der Abschnitt 212 des Motorgehäuses 214, übergreift den motorseitigen Endabschnitt 232 des Hohlrads 230. Im Abschnitt 212 ist eine Innenverzahnung vorgesehen, in die eine im Abschnitt 232 des Hohlrads 230 vorgesehene, komplementäre Außenverzahnung 233 eingreift, so dass eine Verdrehsicherung gegen Verdrehung des Motors 210 relativ zum Hohlrad 230 vorhanden ist. Dabei ist insbesondere möglich und in der dargestellten Ausführungsform realisiert, dass die komplementäre Außenverzahnung 233 im Abschnitt 232 des Hohlrads 230 von der Innenverzahnung, die das Hohlrad 230 aufweist, um seine Funktion im nicht vollständig dargestellten Planetengetriebe zu erfüllen, abweichen kann.

Der detaillierten Aufbau und das Wirkungsprinzip der Verbindung zwischen Motor 210 und Hohlrad 230 über den Runddrahtsprengring 220 ist abgesehen von der Tatsache, dass der übergriffene Abschnitt 232, der in seiner Funktion dem Abschnitt 112 entspricht, nun am Hohlrad 230 angeordnet ist und der übergreifende Abschnitt 212, der in seiner Funktion dem Abschnitt 132 entspricht, nun Teil des Motorgehäuses 214 ist, was aber keine Auswirkungen auf das Zusammenwirken dieser Teile hat, identisch.

Dementsprechend weist Abschnitt 232 des Hohlrads 230 einen radial umlaufenden, in Figur 4 nicht sichtbaren Einstich auf, in den der Runddrahtsprengring 220 mit einem Abschnitt seines Querschnitts eingreift. Der den Abschnitt 232 des Hohlrads 230 übergreifende Abschnitt 212 des Motorgehäuses 214 weist ebenfalls einen radial umlaufenden Einstich 215 auf, in den der Runddrahtsprengring 220 mit einem Abschnitt seines Querschnitts eingreift. Dadurch ist eine Verbindung zwischen Motor 210 bzw. Motorgehäuse 214 und Hohlrad 230 bewirkt.

Dabei hat die motorseitige Wandfläche 216 des Einstichs 215 einen schrägen Verlauf und läuft unter einem Winkel, der kleiner als 90° aber größer als 45° ist relativ zur Rotorachse R, wodurch eine axiale Verspannung von Motor 210 und Hohlrad 230 bewirkt ist mit den für das vorstehend diskutierte Ausführungsbeispiel erläuterten Effekten

### Bezugszeichenliste

- 100,200: Motor-Planetengetriebe-Anordnung
- 110, 210: Motor
- 111, 211: Rotor
- 112, 212: Abschnitt (des Motorgehäuses)
- 113: Außenverzahnung
- 114,214: Motorgehäuse
- 115, 215: Einstich
- 120,220: Runddrahtsprengring
- 130,230: Hohlrad
- 131: Innenverzahnung
- 132,232: Abschnitt (des Hohlrads)
- 133: komplementäre Innenverzahnung
- 134: Einstich
- 135: Wandfläche (dies Einstichs)
- 136: einlaufende Fase
- 137: Frontfläche
- 216: Wandfläche
- 232: komplementäre Außenverzahnung
- R: Rotordrehachse
- X, Y, Z: Detail

## Patentansprüche

1. Motor-Planetengetriebe-Anordnung (100) mit einem Motor (110), der ein Motorgehäuse (114) aufweist, mit einem mit dem Motor (110) verbundenen Planetengetriebe, das ein Hohlrad (130) mit einem Abschnitt (132) aufweist, welcher einen Abschnitt (112) des Motorgehäuses (114) übergreift und mit einem Verbindungselement, welches das Hohlrad (130) mit dem Motorgehäuse (114) verbindet,
**dadurch gekennzeichnet, dass** das Verbindungselement ein Runddrahtsprengring (120) ist, welcher motorseitig in einen Einstich (115) im Motorgehäuse (114) eingreift und welcher hohlradseitig in einen Einstich (134) im den Abschnitt (112) des Motorgehäuses (114) übergreifenden Abschnitt (132) des Hohlrads (130) eingreift.

2. Motor-Planetengetriebe-Anordnung (100) nach Anspruch 1,
**dadurch gekennzeichnet, dass** mindestens einer der Einstiche (115,134), insbesondere der Einstich (134) im den Abschnitt (112) des Motorgehäuses (114) übergreifenden Abschnitt (132) des Hohlrads (130), eine schräg verlaufende Wandfläche (135) aufweist, so dass das Hohlrad (130) axial gegen das Motorgehäuse (114) verspannt ist.

3. Motor-Planetengetriebe-Anordnung (100) nach Anspruch 1 oder 2,
**dadurch gekennzeichnet, dass** die motorseitige Stirnseite des den Abschnitt (112) des Motorgehäuses (114) übergreifenden Abschnitts (132) des Hohlrads (130) eine einlaufende Fase (136) aufweist.

4. Motor-Planetengetriebe-Anordnung (100) nach einem der vorstehenden Ansprüche,
**dadurch gekennzeichnet, dass** der vom Abschnitt (132) des Hohlrads (130) übergriffene Abschnitt (112) des Motorgehäuses (114) einen geringeren Umfang aufweist als der nicht vom Abschnitt (132) des Hohlrads (130) übergriffene Teil des Motorgehäuses (114), so dass der nicht vom Abschnitt (132) des Hohlrads (130) übergriffene Teil des Motorgehäuses (114) plan in das Hohlrad (130) übergeht.

5. Verfahren zum Verbinden eines Motors (110) mit einem Planetengetriebe zur Herstellung einer Motor-Planetengetriebe-Anordnung (100) mit den Schritten
- Bereitstellen eines Motors (110) mit einem Motorgehäuse (114), das einen Einstich (115) aufweist,
- Bereitstellen eines Planetengetriebes mit einem Hohlrad (130), wobei das Hohlrad (130) einen Abschnitt (132) zum Übergreifen des Abschnitts (112) des Motorgehäuses (114), in dem der Einstich (115) angeordnet ist, aufweist, wobei in diesem Abschnitt (132) ein Einstich (134) angeordnet ist und wobei an der Stirnfläche dieses Abschnitts (132) eine einlaufende Fase (136) angeordnet ist,
- Anordnen eines Runddrahtsprengrings (120) am Einstich (115) des Motorgehäuses (114),
- Aufschieben des Hohlrads (130) mit dem Abschnitt (132) zum Übergreifen des Abschnitts (112) des Motorgehäuses (114) auf das Motorgehäuse (114), so dass der Runddrahtsprengring (120) zunächst durch die einlaufende Fase (136) in den Einstich (115) des Motorgehäuses (114) gedrückt wird und dann mit einem Abschnitt in den Einstich (134) des Hohlrads (130) einrastet.

6. Motor-Planetengetriebe-Anordnung (200) mit einem Motor (210), der ein Motorgehäuse (214) aufweist, mit einem mit dem Motor (210) verbundenen Planetengetriebe, das ein Hohlrad (230) mit einem Abschnitt (232) aufweist, welcher von einem Abschnitt (212) des Motorgehäuses (214) übergriffen wird und mit einem Verbindungselement, welches das Hohlrad (230) mit dem Motorgehäuse (214) verbindet,
**dadurch gekennzeichnet, dass** das Verbindungselement ein Runddrahtsprengring (220) ist, welcher motorseitig in einen Einstich (215) im das Hohlrad (230) übergreifenden Abschnitt (212) im Motorgehäuse (214) eingreift und welcher hohlradseitig in einen Einstich im Hohlrad (230) eingreift.

7. Motor-Planetengetriebe-Anordnung (200) nach Anspruch 6,
**dadurch gekennzeichnet, dass** mindestens einer der Einstiche, insbesondere der Einstich (215) im den Abschnitt (232) des Hohlrads (230) übergreifenden Abschnitt (212) des Motorgehäuses (214), eine schräg verlaufende Wandfläche (216) aufweist, so dass das Hohlrad (230) axial gegen das Motorgehäuse (214) verspannt ist.

8. Motor-Planetengetriebe-Anordnung (200) nach Anspruch 6 oder 7,
**dadurch gekennzeichnet, dass** die hohlradseitige Stirnseite des den Abschnitt (232) des Hohlrads (230) übergreifenden Abschnitts (212) des Motorgehäuses (214) eine einlaufende Fase aufweist.

9. Motor-Planetengetriebe-Anordnung (200) nach einem der Ansprüche 6 bis 8,
**dadurch gekennzeichnet, dass** der vom Abschnitt (212) des Motorgehäuses (214) übergriffene Abschnitt (232) des Hohlrads (230) einen geringeren Umfang aufweist als der nicht vom Abschnitt (212) des Motorgehäuses (214) übergriffene Teil des Hohlrads (230), so dass der nicht übergriffene Teil des Hohlrads (230) plan in das Motorgehäuse (214) übergeht.

10. Motor-Planetengetriebe-Anordnung (100,200) nach einem der Ansprüche 1 bis 4 oder 6 bis 9,
**dadurch gekennzeichnet, dass** eine Verdrehsicherung vorhanden ist, die das Verdrehen des Hohlrads (130,230) relativ zum Motorgehäuse (114,214) unterbindet.

11. Verfahren zum Verbinden eines Motors (210) mit einem Planetengetriebe zur Herstellung einer Motor-Planetengetriebe-Anordnung (200) mit den Schritten
- Bereitstellen eines Planetengetriebes mit einem Hohlrad (230), wobei das Hohlrad (230) einen Einstich aufweist,
- Bereitstellen eines Motors (210) mit einem Motorgehäuse (214), wobei das Motorgehäuse (214) einen Abschnitt (212) zum Übergreifen des Abschnitts (232) des Hohlrads (230), in dem der Einstich angeordnet ist aufweist, wobei in diesem Abschnitt (212) ein Einstich (215) angeordnet ist und wobei an der Stirnfläche dieses Abschnitts (212) eine einlaufende Fase angeordnet ist,
- Anordnen eines Runddrahtsprengrings (220) am Einstich des Hohlrads (230),
- Aufschieben des Motors (210) mit dem Abschnitt (212) zum Übergreifen des Abschnitts (232) des Hohlrads (230) auf das Hohlrad (230), so dass der Runddrahtsprengring (220) zunächst durch die einlaufende Fase in den Einstich des Hohlrads (230) gedrückt wird und dann mit einem Abschnitt in den Einstich (215) des Motorgehäuses (214) einrastet.

## Claims

1. Motor/planetary gear unit arrangement (100), comprising a motor (110) which has a motor housing (114), comprising a planetary gear unit which is connected to the motor (110) and which has a ring gear (130) having a portion (132) that overlaps a portion (112) of the motor housing (114), and comprising a connecting element which connects the ring gear (130) to the motor housing (114), **characterized in that** the connecting element is a round-wire snap ring (120) which on the motor side engages in a groove (115) in the motor housing (114) and which on the ring gear side engages in a groove (134) in the portion (132) of the ring gear (130) that overlaps the portion (112) of the motor housing (114).

2. Motor/planetary gear unit arrangement (100) according to claim 1, **characterized in that** at least one of the grooves (115, 134), in particular the groove (134) in the portion (132) of the ring gear (130) that overlaps the portion (112) of the motor housing (114), has a wall surface (135) running at an angle, so that the ring gear (130) is axially braced against the motor housing (114).

3. Motor/planetary gear unit arrangement (100) according to claim 1 or 2, **characterized in that** the motor-side end face of the portion (132) of the ring gear (130) that overlaps the portion (112) of the motor housing (114) has an inwardly running bevel (136).

4. Motor/planetary gear unit arrangement (100) according to any of the preceding claims, **characterized in that** the portion (112) of the motor housing (114) that is overlapped by the portion (132) of the ring gear (130) has a smaller circumference than the part of the motor housing (114) that is not overlapped by the portion (132) of the ring gear (130), so that the part of the motor housing (114) that is not overlapped by the portion (132) of the ring gear (130) merges in planar fashion into the ring gear (130).

5. Method for connecting a motor (110) to a planetary gear unit in order to produce a motor/planetary gear unit arrangement (100), comprising the steps:
- providing a motor (110) having a motor housing (114) which has a groove (115),
- providing a planetary gear unit having a ring gear (130), wherein the ring gear (130) has a portion (132) for overlapping the portion (112) of the motor housing (114) in which the groove (115) is arranged, wherein a groove (134) is arranged in this portion (132), and wherein an inwardly running bevel (136) is arranged on the end face of this portion (132),
- arranging a round-wire snap ring (120) on the groove (115) of the motor housing (114),
- pushing the ring gear (130) having the portion (132) for overlapping the portion (112) of the motor housing (114) onto the motor housing (114), so that the round-wire snap ring (120) is first pressed into the groove (115) of the motor housing (114) by the inwardly running bevel (136) and then latches with a portion into the groove (134) of the ring gear (130).

6. Motor/planetary gear unit arrangement (200), comprising a motor (210) which has a motor housing (214), comprising a planetary gear unit which is connected to the motor (210) and which has a ring gear (230) having a portion (232) that is overlapped by a portion (212) of the motor housing (214), and comprising a connecting element which connects the ring gear (230) to the motor housing (214), **characterized in that** the connecting element is a round-wire snap ring (220) which on the motor side engages in a groove (215) in the portion (212) of the motor housing (214) that overlaps the ring gear (230) and which on the ring gear side engages in a groove in the ring gear (230).

7. Motor/planetary gear unit arrangement (200) according to claim 6, **characterized in that** at least one of the grooves, in particular the groove (215) in the portion (212) of the motor housing (214) that overlaps the portion (232) of the ring gear (230), has a wall surface (216) running at an angle, so that the ring gear (230) is axially braced against the motor housing (214).

8. Motor/planetary gear unit arrangement (200) according to claim 6 or 7, **characterized in that** the ring-gear-side end face of the portion (212) of the motor housing (214) that overlaps the portion (232) of the ring gear (230) has an inwardly running bevel.

9. Motor/planetary gear unit arrangement (200) according to any of claims 6 to 8, **characterized in that** the portion (232) of the ring gear (230) that is overlapped by the portion (212) of the motor housing (214) has a smaller circumference than the part of the ring gear (230) that is not overlapped by the portion (212) of the motor housing (214), so that the part of the ring gear (230) that is not overlapped merges in planar fashion into the motor housing (214).

10. Motor/planetary gear unit arrangement (100, 200) according to any of claims 1 to 4 or 6 to 9, **characterized in that** a rotation-preventing means is present, which suppresses the rotation of the ring gear (130, 230) relative to the motor housing (114, 214).

11. Method for connecting a motor (210) to a planetary gear unit in order to produce a motor/planetary gear unit arrangement (200), comprising the steps:
- providing a planetary gear unit having a ring gear (230), wherein the ring gear (230) has a groove,
- providing a motor (210) having a motor housing (214), wherein the motor housing (214) has a portion (212) for overlapping the portion (232) of the ring gear (230) in which the groove is arranged, wherein a groove (215) is arranged in this portion (212), and wherein an inwardly running bevel is arranged on the end face of this portion (212),
- arranging a round-wire snap ring (220) on the groove of the ring gear (230),
- pushing the motor (210) having the portion (212) for overlapping the portion (232) of the ring gear (230) onto the ring gear (230), so that the round-wire snap ring (220) is first pressed into the groove of the ring gear (230) by the an inwardly running bevel and then latches with a portion into the groove (215) of the motor housing (214).

## Revendications

1. Système d'engrenage planétaire motorisé (100) comprenant un moteur (110) qui comporte un carter de moteur (114), un engrenage planétaire connecté au moteur (110) qui comporte une couronne circulaire (130) ayant un segment (132) qui vient en prise sur un segment (112) du carter du moteur (114), ainsi qu'un élément de connexion qui relie la couronne circulaire (130) au carter du moteur (114),
**caractérisé en ce que**
l'élément de connexion est un jonc en fil à section circulaire (120) qui vient en prise côté moteur dans une encoche (115) du carter du moteur (114) et qui, vient en prise côté couronne dans une encoche (134) du segment (132) de la couronne circulaire (130) venant en prise sur le segment (112) du carter du moteur (114).

2. Système d'engrenage planétaire motorisé (100), conforme à la revendication 1,
**caractérisé en ce qu'**
au moins l'une des encoches (115, 134), en particulier l'encoche (134) du segment (132) de la couronne circulaire (130) venant en prise sur le segment (112) du carter du moteur (114) comprend une surface de paroi (135) s'étendant obliquement de sorte que la couronne circulaire (130) soit serrée axialement contre le carter du moteur (114).

3. Système d'engrenage planétaire motorisé (100) conforme à la revendication 1 ou 2,
**caractérisé en ce que**
la face frontale située côté moteur du segment (132) de la roue dentée (130) venant en prise sur le segment (112) du carter du moteur (114) comprend un biseau rentrant (136).

4. Système d'engrenage planétaire motorisé (100) conforme à l'une des revendications précédentes,
**caractérisé en ce que**
le segment (112) du carter du moteur (114) sur lequel vient en prise le segment (132) de la couronne circulaire (130) a un plus petit périmètre que la partie du carter du moteur (114) sur laquelle ne vient pas en prise le segment (132) de la couronne circulaire (130) de sorte que la partie du carter du moteur (114) sur laquelle ne vient pas en prise le segment (132) de la couronne circulaire (130) passe selon un plan sur la couronne circulaire (130).

5. Procédé de connexion d'un moteur (110) avec un engrenage planétaire pour obtenir un système d'engrenage planétaire motorisé (100) comprenant les étapes consistant à :
- se procurer un moteur (110) comprenant un carter de moteur (114) muni d'une encoche (115),
- se procurer un engrenage planétaire comprenant une couronne circulaire (130), cette couronne circulaire (130) comprenant un segment (132) destiné à venir en prise sur le segment (112) du carter du moteur (114) dans lequel est située l'encoche (115), une encoche (134) étant positionnée dans ce segment (132), et un biseau rentrant (136) étant positionné sur la face frontale de ce segment (132),
- positionner un jonc en fil à section circulaire (120) sur l'encoche (115) du carter du moteur (114),
- faire coulisser la couronne circulaire (130) avec le segment (132) pour permettre la mise en prise du segment (112) du carter du moteur (114) sur le carter du moteur (114) de sorte que le jonc en fil à section circulaire (120) soit tout d'abord poussé par le biseau rentrant (136) dans l'encoche (115) du carter du moteur (114) puis s'encliquette par un segment dans l'encoche (134) de la couronne circulaire (130).

6. Système d'engrenage planétaire motorisé (200) comprenant un moteur (210) qui comporte un carter de moteur (214), un engrenage planétaire connecté au moteur (210) qui comporte une couronne circulaire (230) ayant un segment (232) sur lequel vient en prise un segment (212) du carter du moteur (214) ainsi qu'un élément de connexion qui relie la couronne circulaire (230) au carter du moteur (214),
**caractérisé en ce que**
l'élément de connexion est un jonc en fil à section circulaire (220) qui vient en prise côté moteur dans une encoche (215) réalisée dans le segment (212) du carter du moteur (214) venant en prise sur la couronne circulaire (230), et qui vient en prise côté couronne circulaire dans une encoche de la couronne circulaire (230).

7. Système d'engrenage planétaire (200) conforme à la revendication 6,
**caractérisé en ce qu'**
au moins l'une des encoches, en particulier l'encoche (215) du segment (212) du carter du moteur (214) venant en prise sur le segment (232) de la couronne circulaire (230) comporte une surface de paroi (216) s'étendant obliquement de sorte que la couronne circulaire (230) soit serrée axialement contre le carter du moteur (214).

8. Système d'engrenage planétaire motorisé (200) conforme à la revendication 6 ou 7,
**caractérisé en ce que**
la face frontale située côté couronne circulaire du segment (212) du carter du moteur (214) venant en prise sur le segment (232) de la couronne circulaire (230) comporte un biseau rentrant.

9. Système d'engrenage planétaire motorisé (200) conforme à l'une des revendications 6 à 8,
**caractérisé en ce que**
le segment (232) de la couronne circulaire (230) sur lequel vient en prise le segment (212) du carter du moteur (214) a un plus petit périmètre que la partie de la couronne circulaire (230) sur laquelle ne vient pas en prise le segment (212) du carter du moteur (214) de sorte que la partie de la couronne circulaire (230) sur laquelle ne vient pas en prise le segment (212) du carter du moteur (214) passe selon un plan sur le boîtier du moteur (214).

10. Système d'engrenage planétaire motorisé (100, 200) conforme à l'une des revendications 1 à 4 ou 6 à 9,
**caractérisé en ce qu'**
il est prévu un élément de blocage en rotation qui empêche la rotation de la couronne circulaire (130, 230) par rapport au carter du moteur (114,214).

11. Procédé de connexion d'un moteur (210) avec un engrenage planétaire pour permettre d'obtenir un système d'engrenage planétaire motorisé (200) comprenant les étapes consistant à :
- se procurer un engrenage planétaire comprenant une couronne circulaire (230), cette couronne circulaire (230) comprenant une encoche,
- se procurer un moteur (210) comprenant un carter de moteur (214), ce carter de moteur (214) comprenant un segment (212) destiné à venir en prise sur le segment (232) de la couronne circulaire (230) dans lequel est située l'encoche, une encoche (215), étant positionnée dans ce segment (212) et, un biseau rentrant étant positionné sur la face frontale ce segment (212),
- positionner un jonc en fil à section circulaire (220) sur l'encoche de la couronne circulaire (230),
- faire coulisser le moteur (210) avec le segment (212) pour permettre la mise en prise du segment (232) de la couronne circulaire (230) sur la couronne circulaire (230) de sorte que le jonc en fil à section circulaire (220) soit tout d'abord poussé par le biseau rentrant dans l'encoche de la couronne circulaire (230), puis s'encliquette par un segment dans l'encoche (215) du carter du moteur (214).
